# EUROPÄISCHE PATENTSCHRIFT

(11) **EP 0 998 010 B1**
(45) Veröffentlichungstag und Bekanntmachung des Hinweises auf die Patenterteilung: **12.12.2001**
(21) Anmeldenummer: 99890326.4
(22) Anmeldetag: 19.10.1999
(51) Int. Cl.: H02K 1/27, H02K 1/22

(54) **Transversalflussmaschine**
Transversal flux machine
Machine à flux transversal

(30) Priorität: 30.10.1998 AT 180598
(43) Veröffentlichungstag der Anmeldung: 03.05.2000
(73) Patentinhaber: Bombardier Transportation GmbH, 13627 Berlin (DE)
(72) Erfinder: Güntensperger, Walter, 8426 Augwil-Lufingen (CH); Schäfer, Uwe, 16761 Hennigsdorf (DE); Neudorfer, Harald, 2514 Traiskirchen (AT); Stockmayer, Michael, 2700 Wiener Neustadt (AT)
(74) Vertreter: Thielmann, Andreas

(56) Entgegenhaltungen:
- EP-A- 0 734 112
- DE-A- 1 947 411
- DE-A- 2 013 068
- DE-A- 19 715 019
- FR-A- 2 519 483
- US-A- 4 117 360

## Beschreibung

Die Erfindung betrifft eine Transversalflußmaschine mit einer Vielzahl entlang dem Umfang des Rotors angeordneten Permanentmagneten und dazwischen angeordneten Flußleitstücken aus einem Material mit hoher magnetischer und geringer elektrischer Leitfähigkeit.

Bei Transversalflußmaschinen ist der magnetischen Fluß im Gegensatz zu herkömmlichen elektrischen Maschinen nicht longitudinal sondern transversal gerichtet. Transversalflußmaschinen sind aus relativ vielen Einzelteilen hergestellt, besitzen aber im Vergleich zu anderen Maschinenbauformen sehr hohe Kraftdichten bei vergleichbaren Baugrößen.

Die vorliegende Erfindung ist sowohl auf einseitige als auch auf zweiseitige (doppelseitige Anordnung der Statorjoche) Transversalflußmaschinen anwendbar, unabhängig davon, ob die Maschine als Innenläufer oder Außenläufer ausgeführt ist.

Eine Transversalflußmaschine erzeugt im Gegensatz zu einer Asynchronmaschine kein Drehfeld, sondern ein Wechselfeld. Ein einphasiges Wechselfeld kann in ein mitlaufendes und ein gegenlaufendes Drehfeld zerlegt werden. Ein Drehfeld übt auf den rotierenden Teil einer Maschine ein Drehmoment aus und bewirkt dadurch dessen Drehung. Im Falle der Transversalflußmaschine kann das mitlaufende Drehfeld als momentenbildend und das gegenlaufende Drehfeld als momentenreduzierend betrachtet werden. Das momentenreduzierende Drehfeld bewirkt Verluste und somit eine Reduktion des Wirkungsgrades der Maschine.

Die DE 196 22 262 A1 beschreibt ein Verfahren und eine Vorrichtung zum Aufbringen von Permanentmagnetelementen auf einer Unterlage, durch das eine kostengünstige und exakte Fixierung von Permanentmagnetelementen auf einer Unterlage ermöglicht wird. Dabei werden die Permanentmagnetelemente von einem Haltestreifen umgeben. Wenn der Haltestreifen aus einem elektrisch gut leitendem Material, wie zum Beispiel Kupfer, besteht, ergeben sich dämpfende Kräfte auf den magnetischen Wechselfluß in den umschlossenen Permanentmagnetelementen.

Aufgabe der vorliegenden Erfindung ist die Reduktion der Verluste der eingangs angegebenen Transversalflußmaschine, sodaß das erzeugte Drehmoment und somit der Wirkungsgrad der Maschine erhöht werden kann.

Gelöst wird die erfindungsgemäße Aufgabe dadurch, daß am Rotor ein Dämpferkäfig aus einem Material mit hoher elektrischer Leitfähigkeit und geringer magnetischer Leitfähigkeit angeordnet ist, der die Permanentmagnete und Flußleitstücke zumindest teilweise umgibt, wobei der Dämpferkäfig durch Stege, welche in Richtung des Stators gesehen über den Permanentmagneten und zwischen den Flußleitstücken angeordnet sind, und durch Verbindungsstücke, welche die Stege miteinander verbinden, gebildet ist. Bei der Transversalflußmaschine mit Flußkonzentration können die Permanentmagnete kleiner gestaltet werden, wodurch mehr Platz für die zwischen den Permanentmagneten angeordneten Stege des Dämpferkäfigs zur Verfügung steht, wodurch der Dämpferkäfig leichter herstellbar ist und darüber hinaus als tragender Teil für die Permanentmagnete und Flußleitstücke dienen kann. Vorteilhafterweise sind die Flußleitstücke aus Eisen bzw. Eisenlegierungen oder Sinterteilen mit Eisen hergestellt. Diese Materialien weisen gute magnetische und schlechte elektrische Leitfähigkeit auf und sind relativ billig. Die Flußleitstücke können auch aus laminierten Blechen aufgebaut sein. Dadurch wird die Flußkonzentration weiter verbessert und Streuverluste reduziert. Erfindungsgemäß werden die Auswirkungen des momentenreduzierenden Drehfeldes durch den Dämpferkäfig reduziert, sodaß in Summe ein höheres Drehmoment resultiert. Die durch das gegenläufige Drehfeld verursachten Verluste werden im Dämpferkäfig in Wärme umgesetzt.

Vorteilhafterweise sind die Verbindungsstücke zur Verbindung der Stege des Dämpferkäfigs durch Ringe gebildet, welche vorzugsweise beiderseits in axialer Richtung neben den Permanentmagneten und Flußleitstücken angeordnet sind. Auf diese Weise ergibt sich ein relativ einfach herstellbarer Dämpferkäfig.

Vorteilhafterweise besteht der Dämpferkäfig aus Kupfer bzw. einer Kupferlegierung oder aus Aluminium bzw. einer Aluminiumlegierung. Diese Materialien weisen eine hervorragende elektrische Leitfähigkeit und eine schlechte magnetische Leitfähigkeit auf, sind leicht bearbeitbar und darüber hinaus relativ billig.

Herstellungstechnische Vorteile ergeben sich, wenn der Dämpferkäfig gegossen oder gesintert wird. Beispielsweise kann der relativ komplex aufgebaute Dämpferkäfig relativ rasch und kostengünstig im Aluminium-Spritzgußverfahren hergestellt werden.

Gemäß einem weiteren Erfindungsmerkmal weisen die Ringe des Dämpferkäfigs optional im wesentlichen in axialer Richtung Bohrungen zur Aufnahme von Bolzen, Schrauben od. dgl. auf, mit welchen die Ringe des Dämpferkäfigs miteinander verbunden werden können. Die Bohrungen werden dabei in den Flußleitstücken fortgesetzt, sodaß eine Verspannung der Ringe mit den Flußleitstücken sowie eine Positionierung der Flußleitstücke erfolgt.

Wenn der Dämpferkäfig einstückig ausgebildet ist, erhöht sich die Stabilität der Anordnung und reduziert sich der Montageaufwand.

Zur drehfesten Verbindung des Dämpferkäfigs mit dem Rotor weist dieser gemäß einem weiteren Merkmal der Erfindung mindestens eine Nut, Bohrung od. dgl. auf. Durch Anordnung eines radialen oder axialen Stifts, einer Paßfeder od. dgl. am Rotor, der in diese Nut, Bohrung od. dgl. ragt, kann der Dämpferkäfig somit vor Verdrehen gesichert werden.

Zur genauen und leichteren Positionierung der Permanentmagnete und Flußleitstücke im Dämpferkäfig weist der Dämpferkäfig vorteilhafterweise Nuten zum Einschieben der Permanentmagnete und Flußleitstücke auf. Werden keine Nuten, Bohrungen zur Aufnahme von Schrauben oder Bolzen oder andere Maßnahmen zum genauen Positionieren der Permanentmagnete und Flußleitstücke im Dämpferkäfig verwendet, könnte auch eine vom Dämpferkäfig getrennte Einlegehilfe verwendet werden. Diese Einlegehilfe weist in Art einer Schablone beispielsweise Ausformungen auf, welche in komplementär gestaltete Einkerbungen in den Permanentmagneten und/oder Flußleitstücken eingreifen und somit deren Einlegen in den Dämpferkäfig unterstützen.

Anhand der beigefügten Abbildungen werden die Merkmale und Vorteile der Erfindung näher erläutert. Darin zeigen:
- Fig. 1a: eine Prinzipskizze einer als Außenläufer ausgebildeten Transversalflußmaschine mit Oberflächenmagneten mit einer bekannten Haltestruktur,
- Fig. 1b: einen Schnitt entlang der Schnittlinie I-I aus Fig. 1a,
- Fig. 2a: eine Prinzipskizze einer einer als Außenläufer ausgebildeten Transversalflußmaschine mit Flußkonzentration mit einem erfindungsgemäß ausgebildetenDämpferkäfig,
- Fig. 2b: einen Schnitt entlang der Schnittlinie II-II aus Fig. 2a,
- Fig. 3: eine perspektivische Ansicht eines erfindungsgemäßen Dämpferkäfigs in teilweise geschnittener Form,
- Fig. 4: den Dämpferkäfig gemäß Fig. 3 mit darin angeordneten Permanentmagneten und Flußleitstücken,
- Fig. 5: die Anordnung mehrerer Dämpferkäfige in einem Gehäuserohr einer als Außenläufer ausgebildeten Transversalflußmaschine,
- Fig. 6a u. 6b: eine perspektivische Ansicht und eine Seitenansicht einer anderen Ausführungsform eines Dämpferkäfigs,
- Fig. 7a bis 7g: verschiedene Ausführungsformen von Flußleitstücken im Zusammenhang mit dem erfindungsgemäßen Dämpferkäfig, und
- Fig. 8: verschiedene Ausführungsformen zur Optimierung der Geometrie der Flußleitstücke und Permanentmagneten einer Transversalflußmaschine.

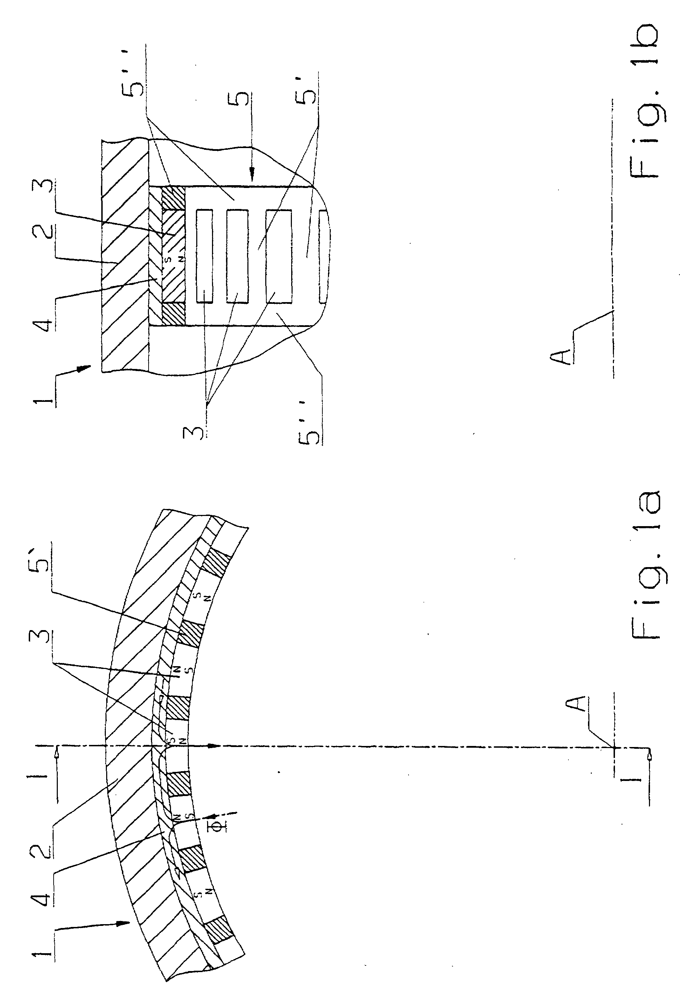

In Fig. 1a ist eine Seitenansicht eines Teils des Rotors 1 einer als Außenläufer ausgebildeten Transversalflußmaschine mit Oberflächenmagneten dargestellt. Die Rotationsachse ist mit A gekennzeichnet. Der Stator, um welchen sich der Rotor 1 dreht, ist der besseren Übersicht halber nicht dargestellt. Der Rotor 1 wird durch ein Gehäuserohr 2 gebildet, an dem im Falle eines Antriebs für ein Fahrzeug beispielsweise ein Fahrzeugrad (nicht dargestellt) angebracht werden kann. In den im Gehäuserohr 2 angeordneten Rückschlußringen 4 sind in Umfangsrichtung aufeinanderfolgend Permanentmagnete 3 mit abwechselnder Magnetisierungsrichtung angeordnet. Die Magnetisierung der Permanentmagnete 3 wird durch Bezeichnung des Nordpols N und Südpols S veranschaulicht. Die Permanentmagnete 3 sind durch einen Rückschlußring 4 magnetisch kurzgeschlossen. Zur Erläuterung ist der Verlauf des magnetischen Flusses Φ eingezeichnet. In einem Dämpferkäfig 5 aus elektrisch gut leitfähigem und magnetisch möglichst schlecht leitfähigem Material, beispielsweise Kupfer oder Aluminium sind die Permanentmagnete 3 angeordnet. Aus Fig. 1b, welche einen Schnitt entlang der Schnittlinie I-I aus Fig. 1a zeigt, ist ersichtlich, daß der Dämpferkäfig 5 derart konstruiert ist, daß die Zwischenräume zwischen den Permanentmagneten 3 durch Stege 5' des Dämpferkäfigs 5 ausgefüllt werden und die Stege 5' über seitlich neben den Permanentmagneten 3 angeordnete Ringe 5" miteinander verbunden sind. Durch die Anordnung des Dämpferkäfigs 5 mit seinem geringen elektrischen Widerstand werden die Verluste gegenüber herkömmlichen Maschinen reduziert und somit die Auswirkungen des gegenläufigen Drehfeldes reduziert. Daraus folgt eine höhere Leistungsausbeute und somit ein höherer Wirkungsgrad der Maschine. Da die Permanentmagnete 3 relativ dünn sind, resultiert auch ein dünner und nicht besonders stabiler Dämpferkäfig 5. Eine Ausführung mit dickeren Permanentmagneten 3 wird durch die damit verbundenen Mehrkosten vermieden. Eine Verbesserung stellt die im folgenden beschriebene Ausführungsvariante einer Transversalflußmaschine mit Flußkonzentration dar.

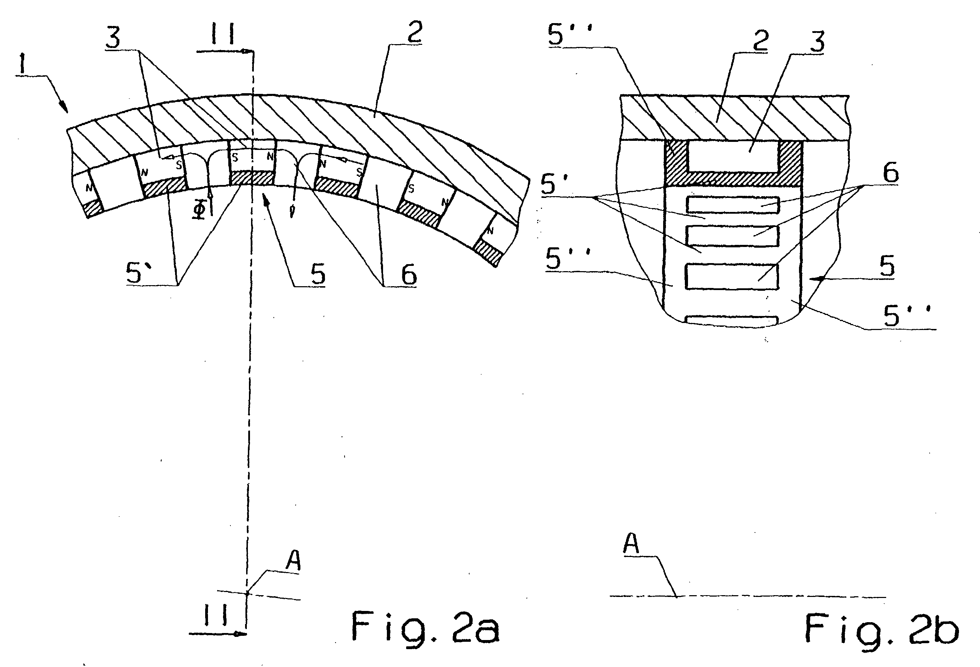

Fig. 2a und 2b zeigen eine Transversalflußmaschine, bei der die Permanentmagnete 3 so angeordnet sind, daß der magnetische Fluß im Permanentmagneten 3 nicht radial, wie bei der Ausführungsform gemäß Fig. 1a und 1b, sondern in Umfangrichtung verläuft. Die Magnetisierungsrichtung ist wiederum durch Bezeichnung des Nordpols N und Südpols S am Permanentmagneten 3 gekennzeichnet. Zur Schließung der magnetischen Feldlinien werden zwischen den Permanentmagneten 3 sogenannte Flußleitstücke 6 aus einem Material mit guter magnetischer und schlechter elektrischer Leitfähigkeit, beispielsweise Eisen, verwendet. Durch die Flußleitstücke 6 wird der magnetische Fluß geleitet und konzentriert. Zur Erläuterung ist der Verlauf des magnetischen Flusses Φ eingezeichnet. Die Flußleitstücke 6 können auch aus lamellierten Blechen oder magnetischen Sinterwerkstoffen hergestellt sein. Sinterwerkstoffe haben zwar etwas geringere magnetische Leitfähigkeit aber dafür geringere Verluste, insbesondere bei hohen Frequenzen. Wie aus Fig. 2a ersichtlich, verläuft der magnetischen Fluß Φ sowohl in radialer, als auch tangentialer Richtung im Flußleitstück 6. Lamellierte Bleche haben anisotrope Eigenschaften, d.h. weisen immer eine Vorzugsrichtung in Bezug auf die magnetische Leitfähigkeit. Demgegenüber haben Sinterwerkstoffe isotrope Eigenschaften, d.h. in alle Richtungen gleiche Eigenschaften in Bezug auf die magnetische Leitfähigkeit. Werden die Flußleitstücke aus laminierten Blechen aufgebaut, ist es vorteilhaft, wenn die Bleche durch Tiefziehen, Prägen, Stanzen od. dgl. hergestellte Ausformungen aufweisen, sodaß die Bleche stapelbar und zu Blechpaketen zusammenpreßbar sind, welche selbständig zusammenhaften. Der erfindungsgemäße Dämpferkäfig 5 ist ähnlich wie in den Fig. 1a und Fig. 1b dargestellt, wobei die Bereiche zwischen den Flußleitstücken 6 durch die Stege 5' des Dämpferkäfigs 5 ausgefüllt und die Stege 5' durch Ringe 5" miteinander verbunden werden. Im Gegensatz zu der Ausführungsform gemäß Fig. 1a und Fig. 1b kann der Dämpferkäfig 5 bei dieser Ausführungsform dicker ausgeführt werden, da die Permanentmagnete 3 dicker ausgeführt sind. Derartige Dämpferkäfige 5 lassen sich einfacher herstellen und sind zudem ausreichend stabil, sodaß sie als Aufnahme für die Permanentmagnete 3 und Fiußleitstücke 6 dienen können. Darüber hinaus sind Dämpferkäfige 5 mit größerem Querschnitt vorteilhaft, da deren Widerstand geringer ist. Ein weiterer Vorteil dieser Ausführungsform liegt darin, daß die Permanentmagnete 3 von den Flußleitstücken 6 und dem Dämpferkäfig 5 vollständig umschlossen sind und somit vor mechanischen Einflüssen geschützt sind.

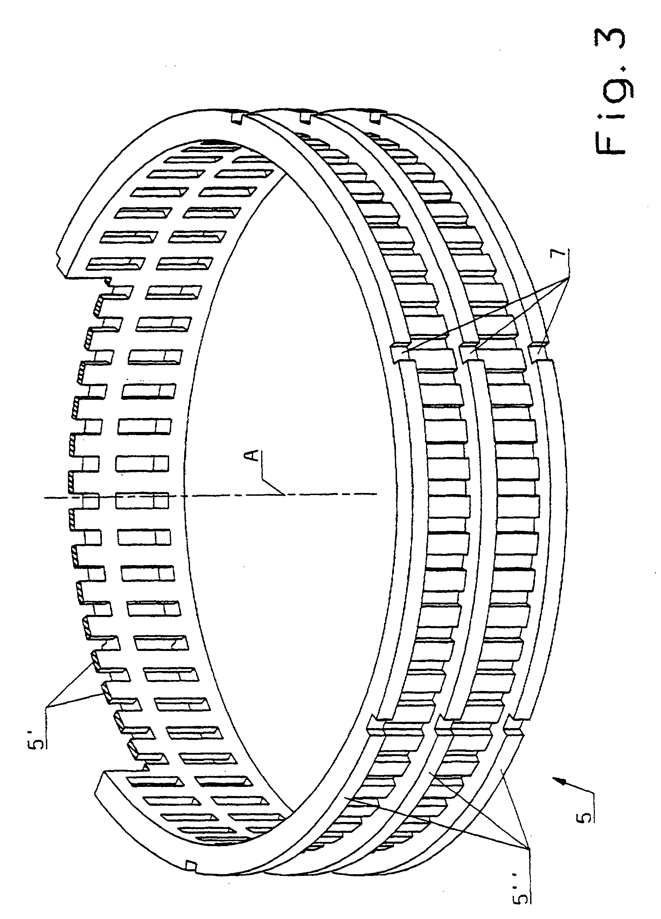

Fig. 3 zeigt einen Dämpferkäfig 5 in perspektivischer und teilweise geschnittenen Darstellung für eine Transversalflußmaschine mit Flußleitstücken gemäß den Fig. 2a und 2b. Der Dämpferkäfig 5 ist für zwei Reihen von Permanentmagneten konzipiert. Je nach gewünschter Polanzahl der Maschine sind entsprechend viele Permanentmagnete entlang des Umfangs der Maschine angeordnet. Davon hängt auch die Anzahl der Stege 5' des Dämpferkäfigs 5 ab. Die Stege 5' sind über die Ringe 5" des Dämpferkäfigs 5 miteinander verbunden. Die außenseitigen Nuten 7 an den Ringen 5" des Dämpferkäfigs 5 dienen zur drehfesten Verbindung mit dem Gehäuserohr des Rotors (nicht dargestellt).

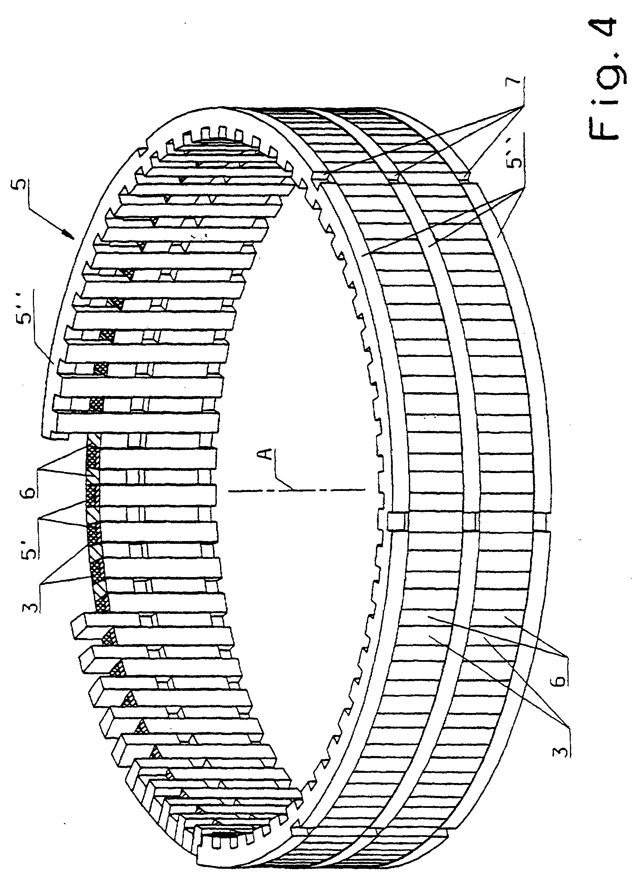

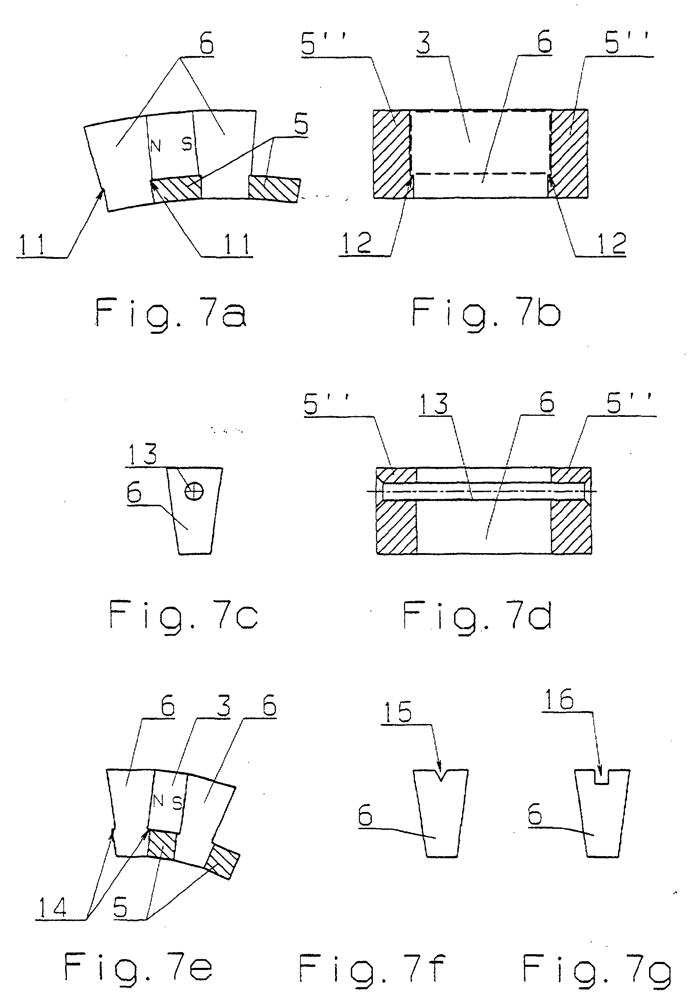

Fig. 4 zeigt den Dämpferkäfig 5 gemäß Fig. 3 mit darin angeordneten Permanentmagneten 3 und Flußleitstücken 6. In den Zwischenräumen zwischen den Stegen 5' des Dämpferkäfigs 5 werden die Flußleitstücke 6 angeordnet. Hinter den Stegen 5' des Dämpferkäfigs 5 und zwischen den Flußleitstücken 6 werden die Permanentmagnete 3 in Umfangsrichtung mit abwechselnder Magnetisierungsrichtung angeordnet. Durch die leicht keilförmige bzw. kreissegmentförmige Gestalt der Flußleitstücke 6 bzw. durch einen Absatz am Flußleitstück 6 (siehe Fig. 7a, 7b und 7e) oder einen durch das Flußleitstück 6 ragenden Bolzen od. dgl. (siehe Fig. 7c und 7d) kann ein Verrutschen in Richtung Drehachse A verhindert werden.

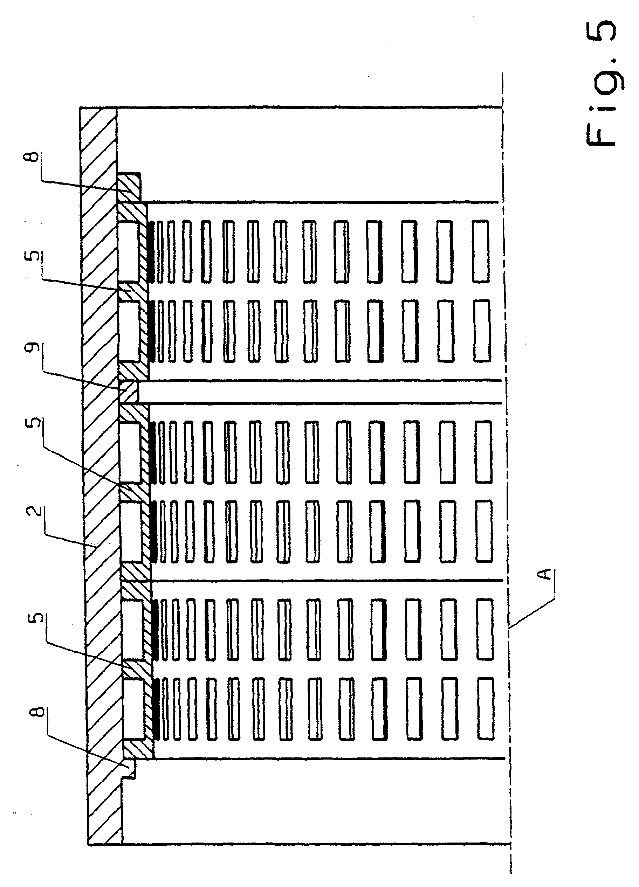

Fig. 5 veranschaulicht die Anordnung mehrerer Dämpferkäfige 5 in einem Gehäuserohr 2 einer als Außenläufer aufgebauten Transversalflußmaschine. Je nach Phasenanzahl der Maschine werden entsprechend viele Dämpferkäfige 5 im Gehäuserohr 2 angeordnet. Dabei ist es möglich, die Dämpferkäfige 5 ohne Abstand direkt aneinander oder mit Abstand zueinander anzuordnen. Zur axialen Fixierung der Dämpferkäfige 5 im Gehäuserohr 2 können Fixierringe 8 , Bunde od. dgl. dienen, von welchen einer vorzugsweise im Gehäuserohr 2 integriert ist. Werden die Dämpferkäfige 5 mit Abstand montiert, wird vorzugsweise ein vor allem elektrisch nichtleitender Distanzring 9 beispielsweise aus thermisch beständigem Kunststoff angeordnet.

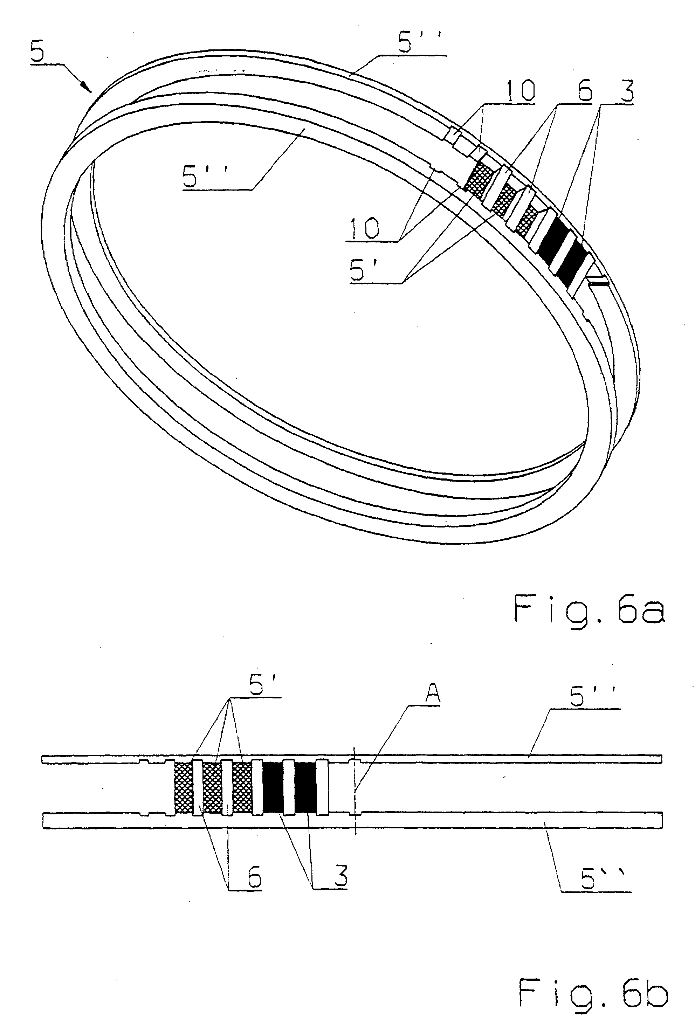

Die Figuren 6a und 6b zeigen eine andere Ausführungsform eines Dämpferkäfigs 5 für eine Reihe von Permanentmagneten 3. In diesem Fall ist der Dämpferkäfig 5 nicht einstückig aufgebaut. Der Dämpferkäfig 5 besteht aus zwei Ringen 5", welche jeweils einseitig mit radial orientierten Nuten 10 versehen sein können. Anstelle der Nuten 10 können die Ringe 5" auch mit axialen Bohrungen zur Aufnahme vom Bolzen od. dgl. zur Positionierung der Flußleitstücke 6 versehen sein (siehe Fig. 7c und 7d). In die Nuten 10 oder eine vom Dämpferkäfig 5 getrennte Positionierhilfe werden die Flußleitstücke 6 eingeschoben und zwischen den Flußleitstücken 6 werden die Stege 5' des Dämpferkäfigs aus elektrisch gut leitendem Material eingelegt. Über die Stege 5' werden schließlich die Permanentmagnete 3 mit abwechselnder Magnetisierungsrichtung eingelegt. Wird ein Ring 5" beiderseits mit Nuten 10 ausgeführt, können auch Dämpferkäfige 5 für mehrere Reihen von Permanentmagneten auf diese Weise hergestellt werden. Gegenüber den einstückigen Dämpferkäfigen 5 weisen diese mehrteiligen Dämpferkäfige 5 natürlich Nachteile in Bezug auf die Stabilität und den Montage- und Wartungsaufwand auf. Die Permanentmagnete 3, Flußleitstücke 6 und Teile des Dämpferkäfigs 5', 5" können durch Anwendung von Klebstoff neben allfälligen mechanischen Verbindungsmitteln miteinander fixiert werden. Ein nachträgliches Vergießen mit Vergußmasse oder Tränken in Harz od. ähnlichem dient zum Füllen allfälliger Zwischenräume und Hohlräume, wodurch die Stabilität der Gesamtanordnung gesteigert werden kann.

Die Fig. 7a zeigt eine Ausführungsform einer Transversalflußmaschine, bei der die Flußleitstücke 6 in Umfangsrichtung mit zwei Absätzen 11 versehen ist. Dadurch können die Flußleitstücke 6 in radialer Richtung gegenüber dem Dämpferkäfig 5 fixiert werden. Dazwischen sind die Permanentmagnete 3 angeordnet. Wie aus Fig. 7b ersichtlich, kann auch eine radiale Befestigung der Flußleitstücke 6 im Dämpferkäfig 5 durch Absätze 12 in axialer Richtung erfolgen. Fig. 7c und 7d zeigen eine Ausführungsvariante, bei der die Flußleitstücke eine Bohrung 13 im wesentlichen in axialer Richtung aufweisen, in welcher ein Bolzen od. dgl. (nicht dargestellt) zur axialen Fixierung der Ringe 5" des Dämpferkäfigs 5 angeordnet werden kann. Fig. 7e zeigt eine gegenüber Fig. 7a abgeänderte Konstruktion der Flußleitstücke, bei der die Absätze 14 zur radialen Fixierung der Flußleitstücke im Dämpferkäfig 5 in Umfangsrichtung nach außen angeordnet sind. Die Gestaltung der Absätze 11, 14 der Flußleitstücke 6 kann je nach Anwendungsfall verschieden erfolgen. Die Figuren 7f und 7g zeigen konstruktive Gestaltungen von Flußleitstücken 6, durch welche die Positionierung im Dämpferkäfig 5 erleichtert werden kann. Demgemäß können Einkerbungen 15 oder Nuten 16 in axialer Richtung am Flußleitstück 6 angeordnet sein, welche in komplementäre Ausformungen am Dämpferkäfig 5 oder einer vom Dämpferkäfig 5 getrennten Einlegehilfe eingreifen. Derartige Einkerbungen 15 oder Nuten 16 od. dgl. können auch an der Innenseite der Flußleitstücke 6 oder auch an den Permanentmagneten 3 vorgesehen werden.

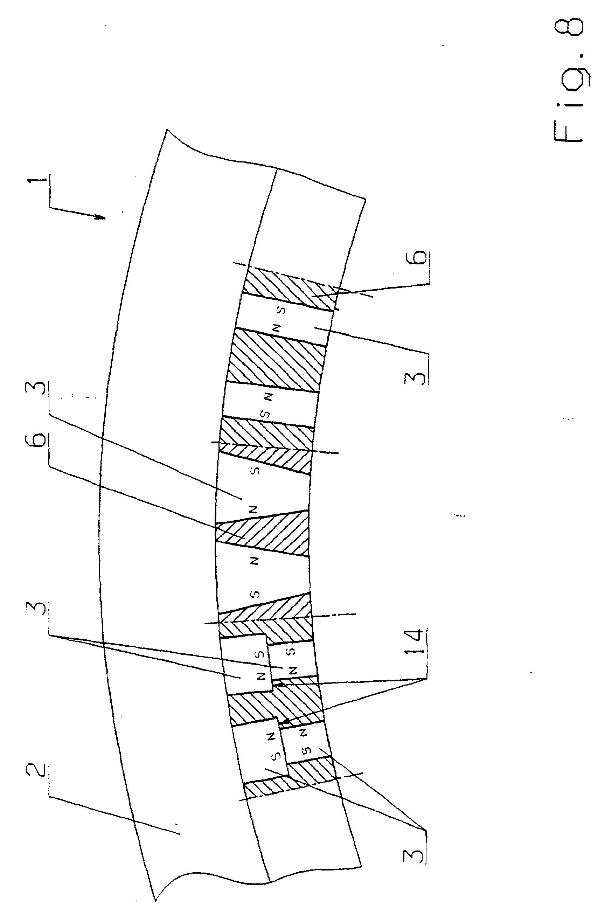

Fig. 8 zeigt noch verschiedene Ausführungsformen zur Optimierung der Geometrie der Flußleitstücke 6 und Permanentmagneten 3 einer Transversalflußmaschine. Am Gehäuserohr 2 des Rotors 1 der Transversalflußmaschine sind in Umfangsrichtung aufeinanderfolgend Permanentmagnete 3 und Flußleitstücke angeordnet. Der Dämpferkäfig 5 ist in diesem Schaubild nicht dargestellt. Im linken Teil der Darstellung sind die Flußleitstücke 6 mit Absätzen 14 in Umfangsrichtung versehen. Die zwischen den Flußleitstücken 6 angeordneten Permanentmagneten 3 können auch geteilt werden, da quaderförmige Permanentmagnete 3 wesentlich billiger als spezielle Formen sind. Ebenso können die Permanentmagnete 3 und Flußleitstücke 6, wie in der Mitte der Fig. 8 gezeigt, keilförmig gestaltet sein, sodaß sich eine Art Gewölbestruktur ergibt. Im rechten Teil der Abbildung ist schließlich der Fall dargestellt, bei dem die Permanentmagnete 3 und Flußleitstücke 6 im wesentlichen qaderförmige Gestalt aufweisen. Wie bereits oben erwähnt, können die Einzelteile mechanisch und zusätzlich oder alternativ dazu durch Anwendung von Klebstoff gegenseitig fixiert werden. Zusätzlich kann die Gesamtanordnung in Harz getränkt oder ausgegossen werden, wodurch Hohlräume, die zu Stabilitätsverlust oder Schwingungen führen können, vermieden werden.

Die Erfindung ist nicht auf die anhand der Skizzen dargestellten Ausführungsformen beschränkt. Der Dämpferkäfig kann genauso bei einer als Innenläufer ausgeführten Transversalflußmaschine sowie bei zweiseitigen Transversalflußmaschinen angewendet werden.

## Patentansprüche

1. Transversalflußmaschine mit einer Vielzahl entlang dem Umfang des Rotors (1) angeordneten Permanentmagneten (3) und zwischen diesen angeordneten Flußleitstücken (6) aus einem Material mit hoher magnetischer und geringer elektrischer Leitfähigkeit, **dadurch gekennzeichnet, daß** am Rotor (1) ein Dämpferkäfig (5) aus einem Material mit hoher elektrischer Leitfähigkeit und geringer magnetischer Leitfähigkeit angeordnet ist, der die Permanentmagnete (3) und Flußleitstücke (6) zumindest teilweise umgibt, wobei der Dämpferkäfig (5) durch Stege (5'), welche in Richtung des Stators gesehen über den Permanentmagneten (3) und zwischen den Flußleitstücken (6) angeordnet sind, und durch Verbindungsstücke, welche die Stege (5') miteinander verbinden, gebildet ist.

2. Transversalflußmaschine nach Anspruch 1, **dadurch gekennzeichnet, daß** die Verbindungsstücke zur Verbindung der Stege (5') des Dämpferkäfigs (5) durch Ringe (5") gebildet sind, welche vorzugsweise beiderseits in axialer Richtung neben den Permanentmagneten (3) und Flußleitstücken (6) angeordnet sind.

3. Transversalflußmaschine nach Anspruch 1 oder 2, **dadurch gekennzeichnet, daß** der Dämpferkäfig (5) aus Kupfer bzw. einer Kupferlegierung oder aus Aluminium bzw. einer Aluminiumlegierung besteht.

4. Transversalflußmaschine nach mindestens einem der Ansprüche 1 bis 3, **dadurch gekennzeichnet, daß** der Dämpferkäfig (5) durch Gießen oder Sintern hergestellt ist

5. Transversalflußmaschine nach mindestens einem der Ansprüche 1 bis 4, **dadurch gekennzeichnet, daß** die Ringe (5") des Dämpferkäfigs (5) im wesentlichen in axialer Richtung Bohrungen (13) zur Aufnahme von Bolzen, Schrauben od. dgl. zur axialen Befestigung bzw. Positionierung aufweisen.

6. Transversalflußmaschine nach einem der Ansprüche 1 bis 5, **dadurch gekennzeichnet, daß** der Dämpferkäfig (5) einstückig ausgebildet ist.

7. Transversalflußmaschine nach einem der Ansprüche 1 bis 6, **dadurch gekennzeichnet, daß** der Dämpferkäfig (5) mindestens eine Nut (7), Bohrung od. dgl. zur drehfesten Verbindung mit dem Rotor (1) aufweist.

8. Transversalflußmaschine nach einem der Ansprüche 1 bis 7, **dadurch gekennzeichnet, daß** der Dämpferkäfig (5) Nuten (10) zum Einschieben der Permanentmagnete (3) und Flußleitstücke (6) aufweist.

## Claims

1. A transverse-flux machine comprising a plurality of permanent magnets (3) arranged around the periphery of the rotor (1) and flux-conducting pieces (6) arranged therebetween made of a material of high magnetic and low electric conductivity, **characterised in that** a damper cage (5) of a material having high electric conductivity and low magnetic conductivity is arranged on the rotor (1) so as to at least partially surround the permanent magnets (3) and the flux-conducting pieces (6), the damper cage (5) being formed by webs (5') which, viewed in the direction of the stator, are arranged above the permanent magnets (3) and between the flux-conducting pieces (6) and by connecting pieces interconnecting the webs (5').

2. A transverse-flux machine according to claim 1, **characterised in that** the connecting pieces for connecting the webs (5') of the damper cage (5) are formed by rings (5") which, preferably, are arranged on either side in axial direction adjacent the permanent magnets (3) and the flux-conducting pieces (6).

3. A transverse-flux machine according to claim 1 or 2, **characterised in that** the damper cage (5) is made of copper, or a copper alloy, respectively, or of aluminum, or an aluminum alloy, respectively.

4. A transverse-flux machine according to at least one of claims 1 to 3, **characterised in that** the damper cage (5) is produced by casting or sintering.

5. A transverse-flux machine according to at least one of claims 1 to 4, **characterised in that** the rings (5") of the damper cage (5), substantially in axial direction thereof, comprise bores (13) for receiving bolts, screws or the like, for axial attachment, or positioning, respectively.

6. A transverse-flux machine according to any one of claims 1 to 5, **characterised in that** the damper cage (5) is formed in one piece.

7. A transverse flux machine according to any one of claims 1 to 6, **characterised in that** the damper cage (5) has a groove (7), a bore or the like for non-rotational connection thereof with the rotor (1).

8. A transverse-flux machine according to any one of claims 1 to 7, **characterised in that** the damper cage (5) has grooves (10) for insertion of the permanent magnets (3) and flux-conducting pieces (6).

## Revendications

1. Moto-générateur électrique à flux magnétique transversal, comprenant une pluralité d'aimants permanents (3) disposés le long de la périphérie du rotor (1) et, disposées entre ces aimants permanents, des pièces (6) conductrices de flux magnétique en un matériau présentant une conductibilité magnétique élevée et une conductibilité électrique faible, **caractérisé en ce qu'**est disposée sur le rotor (1) une cage d'amortissement (5) en un matériau présentant une conductibilité électrique élevée et une conductibilité magnétique faible, cette cage d'amortissement (5) entourant au moins partiellement les aimants permanents (3) et les pièces (6) conductrices de flux, et étant constituée de barrettes (5') qui, vues en direction du stator, sont disposées sur les aimants permanents (3) et entre les pièces (6) conductrices de flux, et sont reliées les unes aux autres par des pièces de liaison.

2. Moto-générateur électrique à flux magnétique transversal selon la revendication 1, **caractérisé en ce que** les pièces de liaison pour relier les barrettes (5') de la cage d'amortissement (5) sont constituées par des anneaux ou bacs (5"), qui sont disposés avantageusement des deux côtés dans la direction axiale à côté des aimants permanents (3) et des pièces (6) conductrices de flux magnétique.

3. Moto-générateur électrique à flux magnétique transversal selon la revendication 1 ou 2, **caractérisé en ce que** la cage d'amortissement (5) est réalisée en cuivre ou en un alliage de cuivre, ou en aluminium, ou en un alliage d'aluminium.

4. Moto-générateur électrique à flux magnétique transversal selon au moins l'une des revendications 1 à 3, **caractérisé en ce que** la cage d'amortissement (5) est fabriquée par fonderie ou par frittage.

5. Moto-générateur électrique à flux magnétique transversal selon au moins l'une des revendications 1 à 4, **caractérisé en ce que** les anneaux (5") de la cage d'amortissement (5) comportent sensiblement dans la direction axiale des alésages (13) pour recevoir des boulons, des vis ou similaires pour leur fixation ou positionnement axiaux.

6. Moto-générateur électrique à flux magnétique transversal selon l'une des revendications 1 à 5, **caractérisé en ce que** la cage d'amortissement (5) est réalisée monobloc.

7. Moto-générateur électrique à flux magnétique transversal selon l'une des revendications 1 à 6, **caractérisé en ce que** la cage d'amortissement (5) comporte au moins une rainure (7), un alésage ou similaire, pour la liaison fixe en rotation avec le rotor (1).

8. Moto-générateur électrique à flux magnétique transversal selon l'une des revendications 1 à 7, **caractérisé en ce que** la cage d'amortissement (5) comporte des rainures (10) pour insérer par enfichage les aimants permanents (3) et les pièces (6) conductrices du flux magnétique.
